# EUROPÄISCHE PATENTANMELDUNG

(11) **EP 3 745 012 A1**
(43) Veröffentlichungstag der Anmeldung: **02.12.2020**
(21) Anmeldenummer: 19176921.5
(22) Anmeldetag: 28.05.2019
(51) Int. Cl.: F16N 7/40, F03D 80/70, F16H 57/04, F16N 19/00, F03D 15/10

(54) **GETRIEBE MIT VERBESSERTER SCHMIERSTOFFREGULIERUNG**

(71) Anmelder: Flender GmbH, 46395 Bocholt (DE)
(72) Erfinder: Klein-Hitpass, Michael, 46483 Wesel (DE); Josten, Guido, 46395 Bocholt (DE); Schmeink, Franz, 46395 Bocholt (DE)
(74) Vertreter: Maier, Daniel Oliver

(57) **Zusammenfassung**

Die Erfindung betrifft ein Getriebe (10), das ein erstes und ein zweites Schmierstoffreservoir (30, 40) umfasst. Im Getriebe (10) ist Schmierstoff (33) mittels einer Pumpe (20) vom ersten ins zweite Schmierstoffreservoir (30, 40) förderbar. Erfindungsgemäße ist die Pumpe (20) mittels einer Welle (14) des Getriebes (10) antreibbar und das zweite Schmierstoffreservoir (40) zu einem stromlosen kontinuierlichen Einstellen eines Schmierstoffpegels (32) im Getriebe (10) ausgebildet. Die Erfindung betrifft auch einen Antriebsstrang (95) für eine Windkraftanlage (90), der mit einem derartigen Getriebe (10) ausgestattet ist. Ferner betrifft die Erfindung eine Windkraftanlage (90) mit einem solchen Antriebsstrang (95) und auch eine Industrie-Applikation (80), die über ein erfindungsgemäßes Getriebe (10) verfügt.

## Beschreibung

Die Erfindung betrifft ein Getriebe mit einer verbesserten Schmierstoffregulierung, durch die ein Schmierstoffpegel einstellbar ist. Die Erfindung betrifft auch einen Antriebsstrang mit einem derartigen Getriebe und eine Windkraftanlage, die über einen solchen Antriebsstrang verfügt. Des Weiteren betrifft die Erfindung eine Industrie-Applikation, in der ein erfindungsgemäßes Getriebe eingesetzt wird.

Aus der Druckschrift DE 10 2015 118 203 A1 ist ein Getriebe für eine Windkraftanlage bekannt, das über eine elektrische Pumpe verfügt, durch die Schmierstoff von einem Schmiermittelsumpf zu einem Schmiermittelreservoir gefördert wird. Bei einem Ausfall der Spannungsversorgung der Pumpe wird Schmierstoff auf dem Schmiermittelreservoir abgelassen und so eine Tauchschmierung im Getriebe hervorgerufen. Ferner wird im Getriebe die von Planschverlusten erzeugte Wärme genutzt, um den Schmierstoff zu erwärmen.

Das Dokument EP 2 600 037 A1 offenbart ein Getriebe für industrielle Anwendungen oder Windkraftanlagen, bei dem eine Pumpe mit einer integrierten Regelungseinheit Schmierstoff aus einem Schmierstofftank in einen Schmierstoffauffangbehälter fördert. Mittels der integrierten Regelungseinheit wird zur Vermeidung von Planschverlusten ein Trockensumpfniveau im Getriebe eingestellt.

WO 2013/136056 A1 zeigt ein Getriebe in einer Windkraftanlage, bei dem Öl von einem niedrigen Ölreservoir zu einem höheren Ölreservoir gepumpt wird. Dazu werden elektrische Pumpen eingesetzt. Bei Ausfall der elektrischen Pumpen ist das Öl aus dem höheren Ölreservoir ablassbar um so eine Schmierung des Getriebes zu unterstützen.

Die Patentschrift US 8,807,922 B2 offenbart auch ein Getriebe, bei dem Öl mittels elektrischer Pumpen gefördert wird.

In einer Vielzahl an Anwendungsgebieten, beispielsweise Windkraftanlagen oder Industrie-Applikationen, besteht Bedarf an Getrieben, die dazu geeignet sind, einen vorhandenen Ölpegel an veränderliche Bedingungen und Anforderungen anzupassen. Dabei werden hohe Anforderungen an die Zuverlässigkeit der Getriebe, deren Wartungsfreundlichkeit und deren Wirtschaftlichkeit gestellt. Der Erfindung liegt die Aufgabe zugrunde, ein Getriebe bereitzustellen, das über eine leistungsfähige Schmierstoffregulierung verfügt, die in zumindest einem skizzierten Aspekt eine Verbesserung bietet.

Die Aufgabenstellung wird durch ein erfindungsgemäßes Getriebe gelöst, das ein erstes und ein zweites Schmierstoffreservoir aufweist. Das erste Schmierstoffreservoir ist hydraulisch mit einem Getriebegehäuse verbunden, so dass ein Pegel im ersten Schmierstoffreservoir einen Schmierstoffpegel im Getriebe definiert. Das zweite Schmierstoffreservoir liegt dabei höher als das erste Schmierstoffreservoir. Mittels einer Pumpe, die dem Getriebe zugeordnet ist, ist Schmierstoff vom ersten Schmierstoffreservoir ins zweite Schmierstoffreservoir förderbar. Das zweite Schmierstoffreservoir ist hydraulisch separat vom ersten Schmierstoffreservoir ausgebildet und frei von Zahnrädern oder anderen antriebsleistungsübertragenden drehenden Komponenten des Getriebes. Erfindungsgemäß ist die Pumpe mittels einer Welle des Getriebes antreibbar, beispielsweise über eine mechanische Kopplung, durch die Drehmoment aus der Antriebsleistung abgreifbar ist, die durch das Getriebe transportiert wird. Das zweite Schmierstoffreservoir ist ferner dazu ausgebildet, beispielsweise in einem vorliegenden stationären Betriebszustand des Getriebes, zwischen der Schmierstoff, der durch die Pumpe gefördert wird, und abfließendem Schmierstoff, ein Gleichgewicht auszubilden. Dadurch ist ein Füllstand im zweiten Schmierstoffreservoir einstellbar, wodurch wiederum der Schmierstoffpegel im Getriebe einstellbar ist. Das Einstellen des Schmierstoffpegels im Getriebe erfolgt dabei kontinuierlich. Ferner erlaubt es die Pumpe, die durch eine Welle des Getriebes antreibbar ist, dass der Schmierstoffpegel im Getriebe stromlos, also ohne Verwendung von Elektrizität oder elektronischen Komponenten, einstellbar ist.

Infolgedessen ist der Schmierstoffpegel exakt an einen vorliegenden Betriebszustand anpassbar. Ferner ist das Getriebe immun gegen Stromausfälle oder Kommunikationsstörungen, und damit hinreichend robust für Verwendung unter harschen Umgebungsbedingungen. Ferner weist das erfindungsgemäße Getriebe eine reduzierte Anzahl an Bauteilen auf, was eine einfache und kosteneffiziente Herstellung erlaubt. Des Weiteren kommt das erfindungsgemäße Getriebe mit einem Minimum an Wartungsaufwand aus und ist somit auch einfach betreibbar.

Beim beanspruchten Getriebe kann die Pumpe derart ausgebildet sein, dass eine Förderleistung der Pumpe von einer vorliegenden Getriebedrehzahl bestimmt ist. Die Getriebedrehzahl bezieht sich dabei auf die Welle des Getriebes, mit der die Pumpe antreibbar ist. Alternativ kann sich die Getriebedrehzahl jedoch auch auf jegliche andere Welle des Getriebes beziehen. Je höher die Getriebedrehzahl ist, umso höher ist im Wesentlichen die Förderleistung der Pumpe. Je höher die Förderleistung der Pumpe ist, umso höher ist der Füllstand im zweiten Schmierstoffreservoir und umso niedriger ist der Schmierstoffpegel im ersten Schmierstoffreservoir, und damit im Getriebe. Unter dem Schmierstoffpegel im Getriebe ist insbesondere der hydraulisch zusammenhängende Teil des Schmierstoffs zu verstehen, der durch drehende Komponenten im Getriebe umgewälzt wird. Durch ein einmaliges Einstellen der Pumpe ist ein solches Verhalten in einfacher Weise einstellbar. Damit ist ein einfaches kontinuierlich funktionierendes selbstregulierendes System in puncto Schmierstoffpegel im Getriebe herstellbar.

In einer weiteren Ausführungsform des beanspruchten Getriebes ist der Schmierstoffpegel im Getriebe in Abhängigkeit von der Getriebedrehzahl einstellbar. Diese abhängige Einstellung des Schmierstoffpegels ist dazu ausgebildet, die im Getriebe vorliegenden Planschverluste zu reduzieren bzw. zu minimieren. Je höher die Getriebedrehzahl ist, umso höher sind bei gleichbleibendem Schmierstoffpegel die im Getriebe vorliegenden Planschverluste. Im beanspruchten Getriebe wird umso mehr Schmierstoff in das zweite Schmierstoffreservoir gefördert, je höher die Getriebedrehzahl ist. Das zweite Schmierstoffreservoir ist derart im beanspruchten Getriebe angeordnet, dass keine Zahnräder oder andere antriebsleistungsübertragenden drehenden Komponenten des Getriebes dort in den Schmierstoff eintauchen. Planschverluste stellen nicht nur mechanische Verluste im Betrieb des Getriebes selbst dar, sondern bewirken auch eine Erwärmung des Schmierstoffs. Eine solche Erwärmung wiederum beschränkt die Möglichkeiten in der Nutzung des Getriebes. Die beanspruchte Lösung bietet somit eine einfache Möglichkeit, den Schmierstoffpegel in einem Getriebe schnell und robust bedarfsgerecht zu regulieren und so die technischen Kapazitäten des Getriebes stärker auszunutzen.

Des Weiteren kann das zweite Schmierstoffreservoir einen Ablauf aufweisen, durch den Schmierstoff selbsttätig aus dem zweiten Schmierstoffreservoir austreten kann. Je höher ein Schmierstoffpegel im zweiten Schmierstoffreservoir ist, umso höher ist an dessen Boden der statische Druck des Schmierstoffs, was ein beschleunigtes Abfließen des Schmierstoffs hervorruft. Dadurch stellt sich bei einer erhöhten Förderleistung der Pumpe auch ein erhöhter Schmierstoffpegel im zweiten Schmierstoffreservoir ein, was wiederum ein Abfließen des Schmierstoffs aus dem zweiten Schmierstoffreservoir beschleunigt. Dadurch stellt sich im stationären Betrieb des Getriebes ein Gleichgewichtszustand ein, in dem eine Förderleistung der Pumpe, und damit ein Zufluss zum zweiten Schmierstoffreservoir, einem Abfluss aus diesem entspricht. Da die Förderleistung der Pumpe von der vorliegenden Getriebedrehzahl abhängig ist, ergibt sich für jede Getriebedrehzahl bei stationärem Betrieb ein anderer Gleichgewichtszustand, der jeweils mit einem Schmierstoffpegel im zweiten Schmierstoffreservoir korrespondiert. Der Betrieb der Pumpe erfordert keine weiteren Steuerungsvorgaben und läuft selbsttätig ab. Es wird so in einfacher Weise eine exakte und bedarfsgerechte Regulierung des Schmierstoffpegels im Getriebe erzielt.

Ferner kann der Ablauf des zweiten Schmierstoffreservoirs einen hydraulischen Durchmesser aufweisen, der zum Einstellen des Schmierstoffpegels im zweiten Schmierstoffreservoir dient. Der hydraulische Durchmesser des Abflusses ist derart gewählt, dass sich bei entsprechenden Getriebedrehzahlen ein gewünschter Schmierstoffpegel im zweiten Schmierstoffreservoir einstellt. Im Zusammenhang mit der insgesamt im Getriebe vorhandenen Schmierstoffmenge ergibt sich daraus wiederum in gewünschter Schmierstoffpegel im ersten Schmierstoffreservoir. Das Einstellen des selbstregulierenden Betriebsverhaltens des beanspruchten Getriebes in puncto Schmierstoff ist somit konstruktiv auf den hydraulischen Durchmesser des Abflusses zurückführbar, was wiederum eine einfache konstruktive Anpassung des beanspruchten Getriebes an unterschiedliche Anwendungsfälle erlaubt. Das Getriebe ist folglich schnell und kosteneffizient an ein breites mögliches Einsatzspektrum anpassbar. Der hydraulische Durchmesser im Abfluss des zweiten Schmierstoffreservoirs kann beispielsweise durch Anbringen entsprechender Blenden oder Ablaufeinsätze kosteneffizient angepasst werden. Dadurch, dass die beanspruchte Lösung auf einer Anpassung des hydraulischen Durchmessers des Ablaufes beruht, ist die Form des Ablaufes auch entsprechend modifizierbar, und somit einfach an unterschiedliche konstruktive Vorgaben anpassbar.

Alternativ oder ergänzend kann der Ablauf aus volumenstromdrosselnd ausgebildet sein, und beispielsweise als Drossel ausgebildet sein. Dazu kann beispielsweise ein Kegelkörper im Ablauf positioniert werden, durch den der Schmierstoff beim Austreten aus dem zweiten Schmierstoffreservoir gebremst wird. Volumenstromdrosselnde Komponenten sind in einer Vielzahl an Konfigurationen und Größen verfügbar. Folglich kann die Regulierung des Schmierstoffpegels im Getriebe in einfacher Weise präzise und kosteneffizient eingestellt werden. Weiter alternativ oder ergänzend kann der Ablauf am zweiten Schmierstoffreservoir auch mit einem Ventil ausgestattet sein.

Darüber hinaus kann das zweite Schmierstoffreservoir über einen Überlauf verfügen, über den eintretender Schmierstoff bei Erreichen eines entsprechenden Schmierstoffpegels im zweiten Schmierstoffreservoir aus diesem im Wesentlichen ungehindert abfließt. Der maximal erreichbare Schmierstoffpegel im zweiten Schmierstoffreservoir ist somit durch den Überlauf einstellbar, was wiederum einen maximalen Volumenstrom im Ablauf definiert. Da die gesamte Schmierstoffmenge im Getriebe im Wesentlichen konstant ist, ist so ein minimaler Schmierstoffpegel im ersten Schmierstoffreservoir vorgebbar. Dadurch kann beispielsweise einem Trockenlaufen der Pumpe, und damit deren Beschädigung, vorgebeugt werden. Die bestimmungsgemäßen Betriebsgrenzen für die Regulierung des Schmierstoffs sind daher im Wesentlichen mechanisch einstellbar, was ein hohes Maß an Robustheit bietet. Das beanspruchte Getriebe bietet deshalb in einfacher Weise eine erhöhte Zuverlässigkeit.

In einer weiteren Ausführungsform des beanspruchten Getriebes ist der Ablauf des zweiten Schmierstoffreservoirs mit einer Abgabevorrichtung verbunden, die dazu ausgebildet ist, Schmierstoff auf eine antriebsleistungsübertragende Komponente des Getriebes, beispielsweise in Zahnrad, abzugeben. Die Abgabevorrichtung kann beispielweise als Düse ausgebildet sein, über die der Schmierstoff zum Beispiel als Strahl und/oder als Sprühnebel abgegeben wird. Hierzu kann die Abgabevorrichtung beispielsweise über zumindest eine Leitung mit dem Ablauf verbunden sein. Mittel der Abgabevorrichtung wird der im zweiten Schmierstoffreservoir erzeugte statische Druck im Schmierstoff am Ablauf weiter genutzt. Das beanspruchte Getriebe verfügt damit über eine verbesserte Schmierstoffversorgung im Betrieb, bei der die umgesetzte Menge an Schmierstoff sich auch selbsttätig an die vorliegende Betriebssituation anpasst. Insgesamt wird im beanspruchten Getriebe eine verstärkte Funktionsintegration erreicht.

Ferner kann die Pumpe an beanspruchten Getrieben mit einem Schmierstofffilter und/oder einem Schmierstoffkühler verbunden sein. Dadurch ist die Güte des Schmierstoffs auch über lange Betriebsdauern aufrechterhaltbar. Das zweite Schmierstoffreservoir ist im Wesentlichen zu einem Aufbewahren von Schmierstoff bei Umgebungsdruck vorgesehen und dient gleichzeitig auch als Ausgleichspuffer für Schmierstoff. Druckverluste im Schmierstoff, die in einem Schmierstofffilter oder Schmierstoffkühler auftreten, stellen für die Funktion des zweiten Schmierstoffreservoirs lediglich eine geringfügige Beeinträchtigung dar. Im beanspruchten Getriebe treten die technisch unvermeidbaren Druckverluste, die mit solchen Komponenten einhergehen, daher an Stellen auf, an denen sie keine funktionswesentliche Beeinträchtigung darstellen. Auch hierdurch wird die Zuverlässigkeit und die Robustheit des beanspruchten Getriebes gesteigert. Des Weiteren können der Schmierstofffilter und/oder der Schmierstoffkühler an einer Außenseite des Getriebes angebracht werden, was die Herstellung und Wartung des Getriebes vereinfacht. Folglich ist das beanspruchte Getriebe wirtschaftlich im Betrieb.

In einer weiteren Ausführungsform des beanspruchten Getriebes kann zwischen der Pumpe und dem zweiten Schmierstoffreservoir ein Druckhalteventil angeordnet sein. Durch das Druckhalteventil ist einstellbar, ab welcher Förderleistung der Pumpe dem zweiten Schmierstoffreservoir Schmierstoff zugeführt wird. Dies erlaubt es, die Betriebsbedingungen, bei denen der in puncto Schmierstoff selbstregulierende Betrieb des Getriebes einsetzt, gezielt einzustellen. Insbesondere kann mittels des Druckhalteventils in einfacher Weise eine derartige Schwelle festgelegt werden. Das beanspruchte Getriebe ist somit in einfacher, und damit wirtschaftlicher Weise konfigurierbar, was eine schnelle Fertigung und Wartung erlaubt.

Darüber hinaus kann das beanspruchte Getriebe als Planetengetriebe, als Stirnradgetriebe, als Kegelradgetriebe, als Schneckengetriebe, als Hypoid-Getriebe, oder eine Kombination hieraus ausgebildet sein. Die beanspruchte Lösung ist in einfacher Weise auf eine Vielzahl an Getriebebauformen übertragbar und bietet damit ein breites mögliches Einsatzspektrum.

Die zugrundeliegende Aufgabenstellung wird auch durch einen erfindungsgemäßen Antriebsstrang gelöst. Der Antriebsstrang ist zur Verwendung in einer Windkraftanlage geeignet ausgebildet und ist in einer Gondel einer Windkraftanlage aufnehmbar. Der Antriebsstrang umfasst eine Rotorwelle, über die eine Antriebsleistung zu einem Generator zu führen ist. Die Rotorwelle und der Generator sind dazu über ein Getriebe drehmomentübertragend miteinander verbunden. Erfindungsgemäß ist das Getriebe gemäß zumindest einer der oben skizzierten Ausführungsformen ausgebildet. Dadurch ist der erfindungsgemäße Antriebsstrang robust, insbesondere gegen Unterbrechungen seiner eigenen Stromversorgung. Dies gewährleistet einen zuverlässigen Betrieb mit minimalen Ausfallzeiten und reduziertem Wartungsaufwand. Ebenso werden im Getriebe Planschverluste minimiert, was wiederum einen ertragreicheren Betrieb des Generators erlaubt. Insgesamt bietet der erfindungsgemäße Antriebsstrang ein hohes Maß an Wirtschaftlichkeit.

Ebenso wird die skizzierte Aufgabenstellung durch eine erfindungsgemäße Windkraftanlage gelöst. Die Windkraftanlage weist einen Rotor auf, der drehbar an einer Gondel angebracht ist. Der Rotor ist über eine Rotorwelle, die zum Antriebsstrang gehört, mit diesem verbunden und dient insgesamt der Gewinnung von Elektrizität. Der Antriebsstrang ist erfindungsgemäß nach einer der oben dargestellten Ausführungsformen ausgebildet und weist ein Getriebe gemäß mindestens einer der oben skizzierten Ausführungsformen auf. Der besonders wirtschaftliche Betrieb des Antriebsstrangs steigert auch die Wirtschaftlichkeit der Windkraftanlage.

Gleichermaßen wird die eingangs beschriebene Aufgabenstellung auch durch eine erfindungsgemäße Industrie-Applikation gelöst. Die Industrie-Applikation weist eine Antriebseinheit auf, die beispielsweise als Elektromotor, Verbrennungsmotor, Hydraulikmotor oder ähnliches ausgebildet sein kann. Die Antriebseinheit ist drehmomentübertragend über ein Getriebe mit einer Abtriebseinheit verbunden. Die Abtriebseinheit kann als mechanische Anwendung ausgebildet sein, beispielsweise als eine Mühle, eine Rohrmühle, eine Zementmühle, eine Vertikalmühle, als Extruder, als Förderband, als Pumpe, als Rollenpresse, als Plattenband, als Rehrohrofen, als Drehwerk, als Rührwerk, als Kompressor, als Gesteinsbrecher, als Hubanlage, oder als Schrott- oder Müllpresse ausgebildet sein. Erfindungsgemäß ist das Getriebe, das die Antriebseinheit und die Abtriebseinheit drehmomentübertragend miteinander verbindet, gemäß zumindest einer der oben skizzierten Ausführungsformen ausgebildet. Dadurch werden die über das Getriebe erzielten technischen Vorteile, insbesondere der damit erzielbare zuverlässige und wartungsarme Betrieb, auf die entsprechende Industrie-Applikation übertragen.

Die Erfindung wird im Folgenden anhand einzelner Ausführungsformen beschrieben. Die Merkmale der einzelnen Ausführungsformen sind dabei untereinander kombinierbar. Die Figuren sind insoweit in gegenseitiger Ergänzung zu lesen, dass gleiche Bezugszeichen in den Figuren auch die gleichen technischen Bedeutungen haben. Es zeigen im Einzelnen:
- FIG 1: einen schematischen Aufbau einer ersten Ausführungsform des beanspruchten Getriebes;
- FIG 2: Ablaufdiagramme zum Betrieb der ersten Ausführungsform des beanspruchten Getriebes;
- FIG 3: eine schematische Außenansicht einer zweiten Ausführungsform des beanspruchten Getriebes;
- FIG 4: einen schematischen Aufbau einer Ausführungsform der beanspruchten Windkraftanlage mit einer Ausführungsform des beanspruchten Antriebsstrangs;
- FIG 5: einen schematischen Aufbau einer ersten Ausführungsform der beanspruchten Industrie-Applikation.

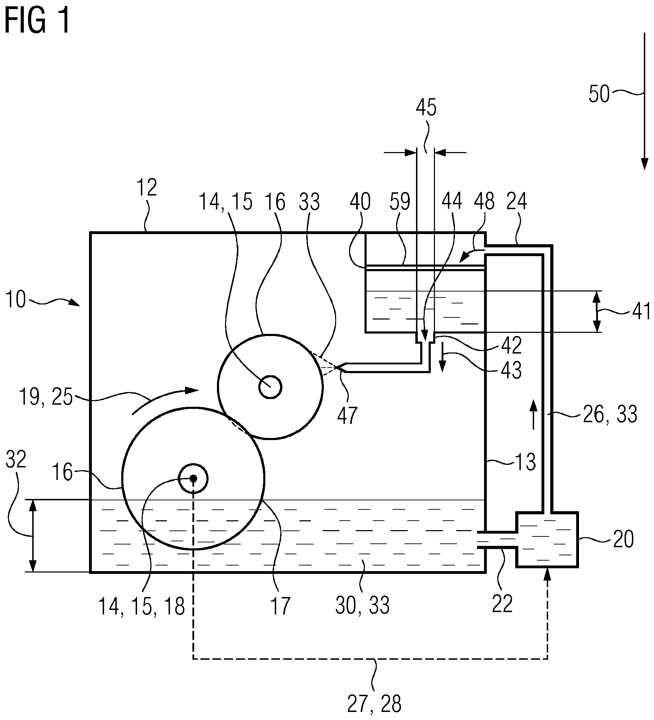

FIG 1 zeigt schematisch den Aufbau eines Getriebes 10 gemäß einer ersten Ausführungsform. Das Getriebe 10 umfasst ein Gehäuse 12, in dem eine Mehrzahl an Wellen 14 und Zahnrädern 16 drehbar aufgenommen sind. Die jeweils um eine Drehachse 15 drehbaren Wellen 14 und Zahnräder 16 kämmen und dienen dazu, Antriebsleistung 25 im Getriebe 10 zu transportieren. Die Antriebsleistung 25 wird dabei über eine Welle 14 zugeführt, die als Eingangswelle 18 dient. Im Gehäuse 12 ist ein Bereich als erstes Schmierstoffreservoir 30 ausgebildet, das sich im Wesentlichen am Boden des Gehäuses 12 befindet. Im ersten Schmierstoffreservoir 30 ist ein Schmierstoff 33 aufgenommen, durch den sich darin, und somit im Getriebe 10, ein Schmierstoffpegel 32 einstellt. Das auf der Eingangswelle 18 aufgenommene Zahnrad 16 taucht im bestimmungsgemäßen Betrieb des Getriebes 10 teilweise in den Schmierstoff 33 ein. Infolge einer Getriebedrehzahl 19, die infolge der Antriebsleistung 25 an der Eingangswelle 18 vorliegt, wird der Schmierstoff 33 teilweise umgewälzt und so ein Planschverlust 17 hervorgerufen.

Das Getriebe 10 weist an einer Außenseite 13 eine Pumpe 20 auf, die über eine Ansaugleitung hydraulisch mit dem ersten Schmierstoffreservoir 30 verbunden ist. Die Pumpe 20 ist über eine nicht näher gezeigte mechanische Verbindung 28 mit der Eingangswelle 18 gekoppelt, so dass ein Teil der ins Getriebe 10 geführten Antriebsleistung 25 als Pumpenantriebsleistung 27 der Pumpe 20 zugeführt wird. Infolge der mechanischen Verbindung 28 ist die Pumpenantriebsleistung 27 im Wesentlichen proportional zur Antriebsleistung 25, die dem Getriebe 10 zugeführt wird. Die mechanische Verbindung 28 ist als starre Kopplung ausgebildet, so dass eine Getriebedrehzahl 19 ungleich Null auch eine Pumpenantriebsleistung 27 ungleich Null hervorruft.

Mittels der Pumpe 20 ist der Schmierstoff 33 durch deren Förderleistung 26 in ein zweites Schmierstoffreservoir 40 förderbar. Der Schmierstoff 33 wird im Wesentlichen unter einer Freistrahlbedingung mittels einer Förderleitung 24 in das zweite Schmierstoffreservoir 40 gefördert, das oberhalb des ersten Schmierstoffreservoirs 30 angeordnet ist. Dadurch ist ein Zufluss 48 zum zweiten Schmierstoffreservoir 40 erzeugbar. Die Begriffe "oberhalb" und "unterhalb" sind im Sinne der Schwerkraft aufzufassen, die in FIG 1 mit dem Pfeil 50 versinnbildlicht wird. Im zweiten Schmierstoffreservoir 40 liegt ein Schmierstoffpegel 41 vor, der in seinem Maximum durch einen Überlauf 59 begrenzt ist. Der Schmierstoffpegel 41 im zweiten Schmierstoffreservoir 40 stellt sich durch den Schmierstoff 33 ein, der von der Pumpe 20 gefördert wird und den Schmierstoff 33, der durch einen Ablauf 42 aus dem zweiten Schmierstoffreservoir 40 austritt. Je schneller die Getriebedrehzahl 19 ist, umso höher ist die Förderleistung 26 der Pumpe 20. Dementsprechend stellt sich bei einem hohen Schmierstoffpegel 41 im zweiten Schmierstoffreservoir 40 ein höherer Druck am Abfluss 42 ein, was wiederum mehr Schmierstoff 33 austreten lässt. Dadurch stellt sich je nach Getriebedrehzahl 19 ein anderer Schmierstoffpegel 41 im zweiten Schmierstoffreservoir 40 ein. Infolge eines erhöhten Schmierstoffpegels 41 im zweiten Schmierstoffreservoir 40 liegt ein korrespondierend abgesenkter Schmierstoffpegel 32 im ersten Schmierstoffreservoir 30 vor. Dadurch, dass der Schmierstoffpegel 32 im ersten Schmierstoffreservoir 30 abgesenkt ist, sind die Planschverluste 17, die durch das Eintauchen des Zahnrads 16 in den Schmierstoff 33 hervorgerufen werden, reduziert. Damit ergibt sich je nach Getriebedrehzahl 19 im Getriebe 10 nach FIG 1 selbsttätig ein angepasster Schmierstoffpegel 32 im ersten Schmierstoffreservoir 30, und damit im Getriebe 10 insgesamt.

Das Verhalten des Ablaufes 42, durch den Schmierstoff 33 austritt, wird unter anderem durch dessen hydraulischen Durchmesser 45 bestimmt. Der hydraulische Durchmesser 45 ist am zweiten Schmierstoffreservoir 40 durch ein Einsatzstück einstellbar, und somit ein Ablaufstrom 43.

Des Weiteren ist am Ablauf 42 des zweiten Schmierstoffreservoirs 40 ein volumenstromdrosselndes Element 44 angeordnet, das im Wesentlichen kegelförmig ausgebildet ist. Dadurch ist der Ablaufstrom 43 weiter einstellbar. Der Ablauf 42 ist mit einer Abgabevorrichtung 47 verbunden, die im Wesentlichen als Düse ausgebildet ist und über die eine Ablaufstrom 43 des zweiten Schmierstoffreservoirs 40 austritt. Die Abgabevorrichtung 47 ist auf eine Zahnrad 16 im Getriebe 10 gerichtet, wodurch dafür eine zusätzliche Schmierung und/oder Kühlung bereitgestellt wird. Der Schmierstoffpegel 32 im ersten Schmierstoffreservoir 30 ist insgesamt selbstregulierend und da die Regulierung im Wesentlichen mechanisch erfolgt, ist sie auch ohne elektrische Energie, also stromlos, möglich. Dadurch wird ein hohes Maß an Robustheit und Zuverlässigkeit erzielt. Das Einstellen des Verhaltens dieser Regulierung kann durch die Auswahl bzw. Konfiguration der Pumpe 20, durch Einstellen des hydraulischen Durchmessers 45 und/oder ein volumendrosselndes Element 44 am Ablauf 42 mechanisch eingestellt werden, was eine hohe Kosteneffizienz und bietet und wenig Wartung des Getriebes 10 erforderlich macht.

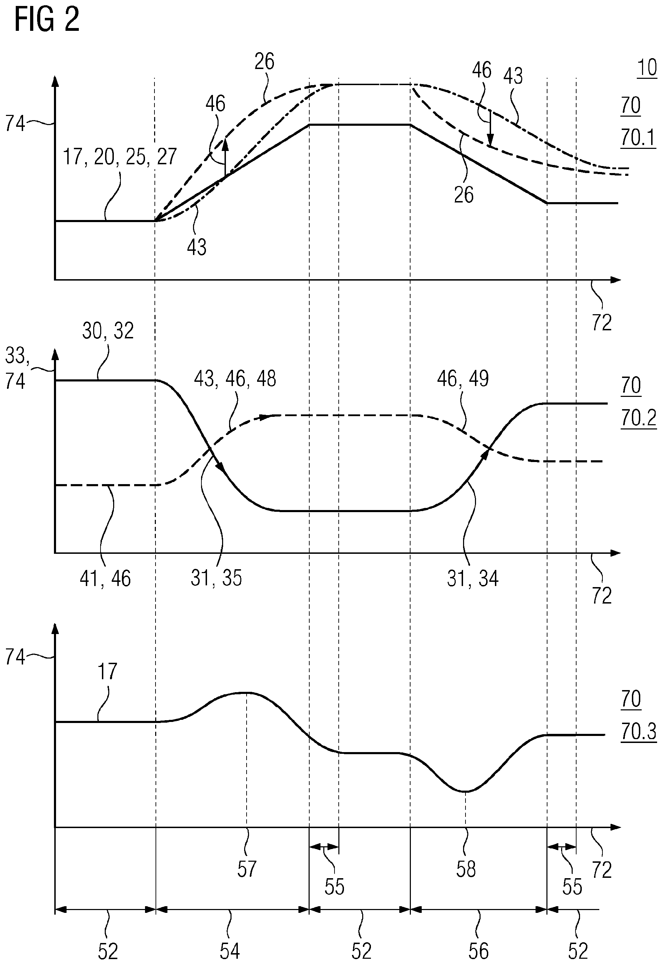

In FIG 2 ist schematisch die Funktionsweise des beanspruchten Getriebes 10 in Diagrammen 70 dargestellt. Jedes der Diagramme 70 weist eine horizontale Zeitachse 72 auch, wobei gleiche Positionen auf der Zeitachse 72 in einem ersten, zweiten und dritten Diagramm 70.1, 70.2, 70.3 auch den gleichen Zeitpunkt darstellen. Ebenso weist jedes Diagramm 70 eine vertikale Größenachse 74 auf, an der die entsprechenden Parameter dargestellt sind. In einem stationären Betrieb 52, der in den Diagrammen 70 links dargestellt ist, liegt eine konstante Antriebsleistung 25 am Getriebe 10 an, durch die eine konstante Getriebedrehzahl 19 vorliegt. Von der Antriebsleistung 25 wird ein Teil als Pumpenantriebsleistung 27 genutzt, um die nicht näher dargestellte Pumpe 20 zu betreiben. Auch die Pumpenantriebsleistung 27 ist im stationären Betrieb 52 konstant. Während des stationären Betriebs 52 liegt, wie im zweiten Diagramm 70.2 gezeigt, ein gleichbleibender, also konstanter, Schmierstoffpegel 32 im nicht näher abgebildeten ersten Schmierstoffreservoir 30 vor. Korrespondierend hierzu liegt ein konstanter Schmierstoffpegel 41 im zweiten Schmierstoffreservoir 40 vor. Die Summe der Schmierstoffpegel 32, 41 bleibt stets konstant. Durch die vorliegende Antriebsleistung 25 liegt am Getriebe 10 im stationären Betrieb 52 auch eine konstante Planschverlust 17 im Getriebe 10 vor, wie im Diagramm 70.3 dargestellt.

Dem stationären Betrieb 52 schließt sich eine Beschleunigungsphase 54 an, in der die Antriebsleistung 25 im Wesentlichen linear ansteigt. Der Anstieg der Antriebsdrehzahl 25 entspricht dabei auch verzögerungsfrei einem Anstieg der Pumpenantriebsleistung 27 und der Getriebedrehzahl 19. Durch die ansteigende Pumpenantriebsleistung 27 erfolgt auch ein Anstieg einer Förderleistung 26 der Pumpe 20. Ein gesteigerter Zufluss 48 zum zweiten Schmierstoffreservoir 40 wird so hervorgerufen. Ebenso wird durch den gesteigerten Zufluss 48 der Schmierstoffpegel 41 im zweiten Schmierstoffreservoir 40 erhöht, was wiederum in einem gesteigerten Ablaufstrom 43 aus dem zweiten Schmierstoffreservoir 40 resultiert. Zwischen der Förderleistung 26, die einen Zufluss 48 zum zweiten Schmierstoffreservoir 40 erzeugt und dem Ablaufstrom 43 liegt ein Versatz vor, durch den sich eine Nettoströmung 46 ins zweite Schmierstoffreservoir 40 einstellt. Der im ersten Diagramm 70.1 nach oben gerichtete Pfeil zeigt einen Anstieg des Schmierstoffpegels 41 im zweiten Schmierstoffreservoir 40 an. Der Schmierstoff 33 wird dabei von ersten Schmierstoffreservoir 30 ins zweite Schmierstoffreservoir 40 gefördert. Korrespondierend dazu erfolgt in der Übergangsbetriebsphase 54 ein Abfluss 35, und unter Berücksichtigung von zurückfließendem Schmierstoff 33, damit eine Nettoströmung 31 aus dem ersten Schmierstoffreservoir 30 heraus. Während der Beschleunigungsphase 54 erfolgt gleichzeitig ein vorübergehender Anstieg der Planschverluste 17 im Getriebe 10, der zum Ende der Beschleunigungsphase 54 in einen Rückgang übergeht. Die Planschverluste 17 erreichen während der Beschleunigungsphase 54 ein lokales Maximum. Dieses wird dadurch hervorgerufen, dass die Planschverluste 17 mit steigender Getriebedrehzahl 19 ansteigen, jeder Schmierstoffpegel 32 im ersten Schmierstoffreservoir 30 jedoch noch höher liegt, als ein optimierter Betrieb gebietet. Erst mit einem weiteren Rückgang des Schmierstoffpegels 32 im ersten Schmierstoffreservoir 30 stellt sich reduzierte Planschverluste 17 ein, wie im dritten Diagramm 70.3 gezeigt.

An die Beschleunigungsphase 54 schließt sich eine weitere stationäre Betriebsphase 52 an, die eine Einpendelphase 55 umfasst. Während der Einpendelphase 55 erreicht die Antriebsleistung 25, und damit die Getriebedrehzahl 19 und die Pumpenantriebsleistung 27 ein gleichbleibendes Niveau. Ferner gleichen sich die Förderleistung 26 der Pumpe 20 und der sich einstellende Ablaufstrom 43 an. Dadurch werden in der Einpendelphase 55, wie im zweiten Diagramm 70.2 abgebildet, konstanter Schmierstoffpegel 32, 41 im ersten bzw. zweiten Schmierstoffreservoir 30, 40 erreicht. Durch den reduzierten Schmierstoffpegel 32 im ersten Schmierstoffreservoir 30 gehen die Planschverluste 17 in der Einpendelphase 55 weiter zurück. In der stationären Betriebsphase 52, die die Einpendelphase 55 umfasst, stellt sich damit insgesamt ein neuer gleichbleibender Betrieb des Getriebes 10 ein.

Der stationären Betriebsphase 52 folgt eine Bremsphase 56, in der die Antriebsleistung 25, die dem Getriebe 10 zugeführt wird, reduziert wird. Korrespondierend hierzu wird auch die Getriebedrehzahl 19 reduziert und die Pumpenantriebsleistung 27. Dabei ist der Rückgang der Förderleistung 26 der Pumpe stärker als der Rückgang des Ablaufstroms 43, so dass sich eine Nettoströmung 46 einstellt, durch die der Schmierstoffpegel 41 im zweiten Schmierstoffreservoir 40 gesenkt wird. Dies ist im ersten Diagramm durch den nach unten gerichteten Pfeil zur Nettoströmung 46 dargestellt. Es stellt sich insgesamt ein Abfluss 49 am zweiten Schmierstoffreservoir 40 ein, wie im zweiten Diagramm 70.2 gezeigt. Korrespondierend zum Schmierstoffpegel 41 im zweiten Schmierstoffreservoir 40 erfolgt gleichzeitig ein Anstieg des Schmierstoffpegels 32 im ersten Schmierstoffreservoir 30. Dieser ist als Nettoströmung 31 dargestellt, die als Zufluss 34 ausgebildet ist. Während der Bremsphase 56 erreichen die Planschverluste 17 ein lokales Minimum 58. Im lokalen Minimum 58 ist der Schmierstoffpegel 32 im ersten Schmierstoffreservoir 30 für einen dauerhaften Betrieb zu niedrig und bietet nur eine verringerte Kühlwirkung. Durch das Ansteigen des Schmierstoffpegels 32 im ersten Schmierstoffreservoir 30 werden die Planschverluste 17 erhöht und dabei gleichzeitig eine für den dauerhaften Betrieb erforderliche Kühlwirkung wiederhergestellt. Das lokale Maximum 57 in der Beschleunigungsphase 54 und das lokale Minimum 58 in der Bremsphase 56 sind durch entsprechende Auswahl eines Ablaufs 42 am zweiten Schmierstoffreservoir 40 betragsmäßig einstellbar. Das transiente Verhalten des Getriebes 10, also das Verhalten in der Beschleunigungsphase 54 und in der Bremsphase 56 ist so in puncto Planschverluste 17 verbessert.

Der Bremsphase 56 schließt sich eine weitere stationäre Betriebsphase 52 an, die eine Einpendelphase 55 aufweist. Analog der Einpendelphase 55 nach der Beschleunigungsphase 54, gleichen sich die Förderleistung 26 der Pumpe 20 und der Ablaufstrom 43 an, so dass die Schmierstoffpegel 32, 41 in den Schmierstoffreservoirs 30, 40 gleich bleiben und die Planschverluste 17 auch einen im Wesentlichen konstanten Wert annehmen. In der dargestellten Ausführungsform des beanspruchten Getriebes 10 weisen die Einpendelphase 55 eine reduzierte Dauer auf, so dass mit dem Getriebe 10 auch ein dynamischer Betrieb mit häufigen und/oder starken Änderungen des Getriebedrehzahl 19 mit reduzierten Planschverlusten 17 möglich ist.

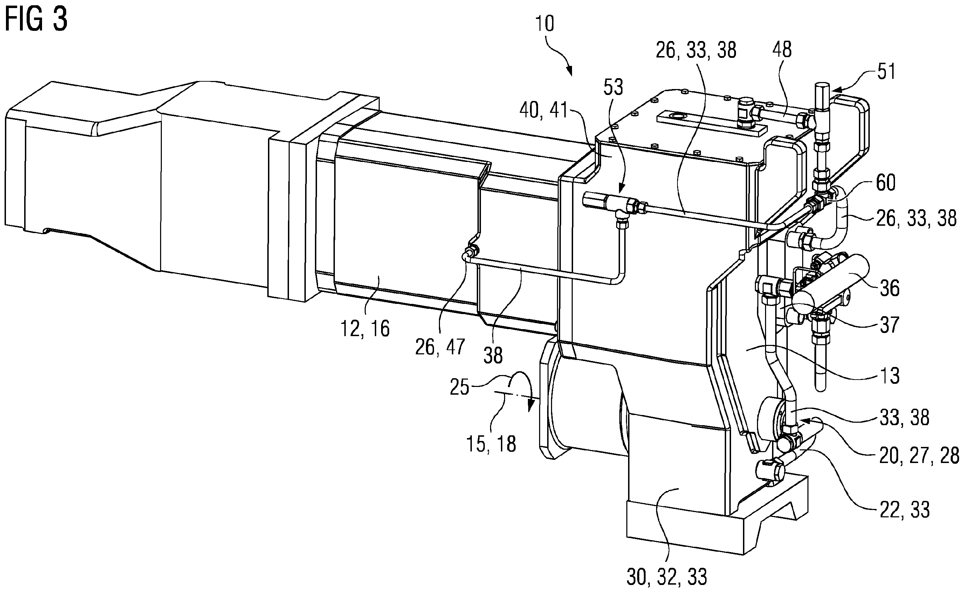

FIG 3 zeigt schematisch in einer Außenansicht eine zweite Ausführungsform des beanspruchten Getriebes 10. Das Getriebe 10 weist ein Gehäuse 12 auf, in dem eine Mehrzahl an Zahnrädern 16 drehbar aufgenommen ist. Über eine nicht näher dargestellte Eingangswelle 18 ist bezogen auf eine Drehachse 15 eine Antriebsleistung 25 in das Getriebe 10 einleitbar. Die Antriebsleistung 25 wird im Bereich eines ersten Schmierstoffreservoirs 30 eingeleitet, in dem Schmierstoff 33 aufgenommen ist und durch den sich ein Schmierstoffpegel 32 im ersten Schmierstoffreservoir 30 einstellt. An einer Außenseite 13 des Gehäuses 13 des Getriebes 10 ist eine Pumpe 20 angebracht, der über die Eingangswelle 18 Pumpenantriebsleistung 27 zur Verfügung gestellt wird. Die Pumpenantriebsleistung 27 wird über eine mechanische Kopplung 28 durch die Eingangswelle 18 bereitgestellt und in die Pumpe 20 eingeleitet. Die Pumpe 20 ist dazu ausgebildet, über eine Ansaugleitung 22, die auch außerhalb des Gehäuses 12 angebracht ist, Schmierstoff 33 aus dem ersten Schmierstoffreservoir 30 anzusaugen. Über weitere Leitungen 38 wird der Schmierstoff 33 zu einem Schmierstoffkühler 37 und zu einem Schmierstofffilter 36 gefördert. Ausgehend hiervor wird er Schmierstoff 33 durch die Förderleistung 26, die durch die Pumpe 20 erzeugt wird, zu einem Druckhalteventil 51 geführt. Das Druckhalteventil 51 ist zu einem Öffnen bei einem einstellbaren Druck im Schmierstoff 33 ausgebildet. Dadurch ist einstellbar, bei welcher Pumpenantriebsleistung 27 ein zweites Schmierstoffreservoir 40 mit Schmierstoff 33 befüllt wird und ein Zufluss 48 in dieses zustande kommt. Es stellt sich im Betrieb ein Schmierstoffpegel 41 im zweiten Schmierstoffreservoir 40 ein.

Ferner sind die Leitungen 38 mit einer Verzweigung 60 gekoppelt, bei der eine Leitung 38 zu einer Abgabevorrichtung 47 führt. Zwischen der Verzweigung 60 und der Abgabevorrichtung 47 ist ein Druckwächter 53 angeordnet. Der Druckwächter 53 ist dazu ausgebildet, eine Unterbrechung in der Förderung des Schmierstoffs 33 festzustellen. Der Druckwächter 53 ist somit dazu ausgebildet, den Betrieb der Pumpe 20 zu überwachen. Eine festgestellte Unterbrechung kann somit einem Benutzer gemeldet werden. Über die Abgabevorrichtung 47, die sich ins Innere des Gehäuse 12 erstreckt, sind darin aufgenommene Zahnräder 16 schmierbar. Die Leitungen 38, der Schmierstoffkühler 37, der Schmierstofffilter 36, und die Pumpe 20 sind an der Außenseite 13 des Gehäuses 12 angeordnet und dadurch einfach zu inspizieren und zu reparieren. Im Getriebe 10 liegt ein Zusammenwirken des ersten und zweiten Schmierstoffreservoirs 30, 40 analog FIG 1 bzw. FIG. 2 vor, so dass ein in puncto Planschverluste 17 ein optimierter Betrieb gewährleistet ist. Dazu ist das zweite Schmierstoffreservoir 40 oberhalb des ersten Schmierstoffreservoir 30 angeordnet.

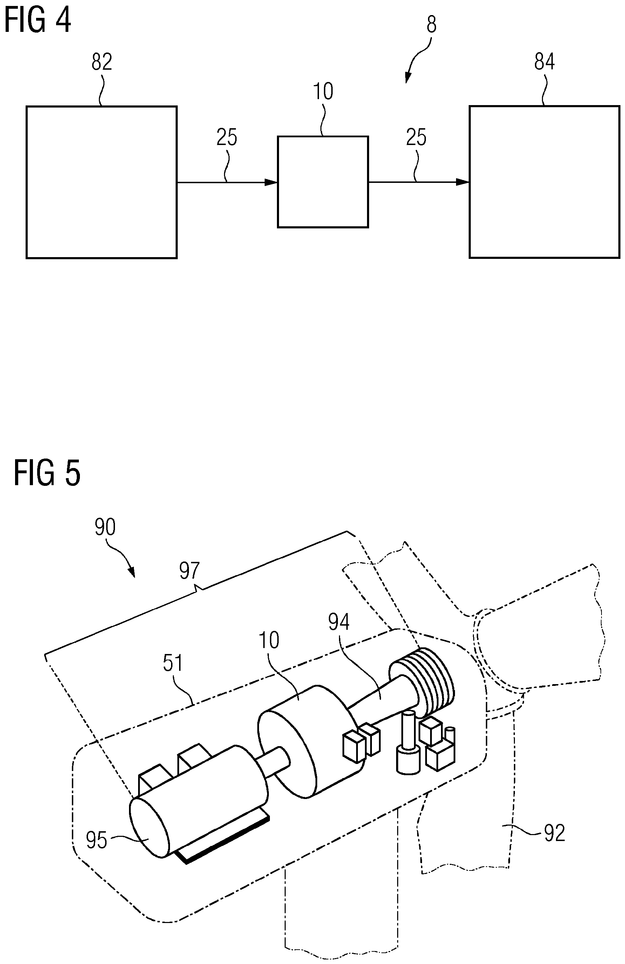

FIG 4 zeigt schematisch den Aufbau einer beanspruchten Industrie-Applikation 80, die eine Antriebseinheit 82 und eine Abtriebseinheit 84 aufweist, die drehmomentübertragend über ein Getriebe 10 miteinander verbunden sind. Die Antriebseinheit 82 ist dazu ausgebildet, eine Antriebsleistung 25 bereitzustellen, die für den Betrieb der Abtriebseinheit 64 notwendig ist. Die Antriebseinheit 62 ist dazu beispielsweise als Elektromotor, als Verbrennungsmotor, oder als Hydraulikmotor ausgebildet. Die Abtriebseinheit 84 ist als mechanische Anwendung ausgebildet. Die Abtriebseinheit 84 ist dementsprechend ausgebildet, dass die Industrie-Applikation 80 beispielsweise eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ist. Das Getriebe 10 ist dabei gemäß einer der oben beschriebenen Ausführungsformen ausgebildet und/oder dazu geeignet. Dadurch sind die Antriebseinheit 82, und dementsprechend auch die Abtriebseinheit 84, dynamisch betreibbar. Der Schmierstoffpegel 32, 41 ist durch das skizzierte Getriebe 10 schnell anpassbar. Diese gewonnene Dynamik im Betrieb ist für einen flexiblen, und damit wirtschaftlichen Betrieb der Industrie-Applikation 80 nutzbar. Ebenso ist der Wartungsaufwand für das Getriebe 10 reduziert und ein Betrieb in anspruchsvollen Umgebungen möglich.

Ferner ist in FIG 5 eine Ausführungsform einer beanspruchten Windkraftanlage 90 dargestellt. Die Windkraftanlage 90 weist einen Rotor 92 auf, der an einer Gondel 91 drehbar angebracht ist. Der Rotor 92 ist mit einer Rotorwelle 94 verbunden, durch die über ein Getriebe 10 ein Generator 95 angetrieben wird. Die Rotorwelle 94, das Getriebe 10 und der Generator 95 gehören zu einem Antriebsstrang 97 der Windkraftanlage 90 und ist in der Gondel 91 aufgenommen. Das Getriebe 10 ist dabei nach einer der oben dargestellten Ausführungsformen ausgebildet. Durch das verbesserte Getriebe 10 wird für die Windkraftanlage 90 ein dynamischerer Betrieb ermöglicht, was eine höhere Ausbeute an Elektrizität ermöglicht. Des Weiteren wird der Wartungsaufwand durch das Getriebe 10 reduziert.

## Patentansprüche

1. Getriebe (10), umfassend ein erstes und ein zweites Schmierstoffreservoir (30, 40), wobei Schmierstoff (33) mittels einer Pumpe (20) vom ersten ins zweite Schmierstoffreservoir (30, 40) förderbar ist, **dadurch gekennzeichnet, dass** die Pumpe (20) mittels einer Welle (14) des Getriebes (10) antreibbar ist und das zweite Schmierstoffreservoir (40) zu einem stromlosen kontinuierlichen Einstellen eines Schmierstoffpegels (32, 41) im Getriebe (10) ausgebildet ist.

2. Getriebe (10) nach Anspruch 1, **dadurch gekennzeichnet, dass** eine Förderleistung (26) der Pumpe (20) von einer Getriebedrehzahl (19) abhängig ist.

3. Getriebe (10) nach Anspruch 1 oder 2, **dadurch gekennzeichnet, dass** der Schmierstoffpegel (32, 41) zu einer Minimierung von Planschverlusten (17) in Abhängigkeit von der Getriebedrehzahl (19) kontinuierlich einstellbar ist.

4. Getriebe (10) nach einem der Ansprüche 1 bis 3, **dadurch gekennzeichnet, dass** das zweite Schmierstoffreservoir (40) über einen Ablauf (42) verfügt, der zum Einstellen des Schmierstoffpegels (32) im Getriebe (10) in Abhängigkeit von der Getriebedrehzahl (19) ausgebildet ist.

5. Getriebe (10) nach Anspruch 4, **dadurch gekennzeichnet, dass** der Ablauf (42) einen hydraulischen Durchmesser (45) zum Einstellen des Schmierstoffpegels (42) aufweist und/oder volumenstromdrosselnd ausgebildet ist.

6. Getriebe (10) nach einem der Ansprüche 1 bis 5, **dadurch gekennzeichnet, dass** das zweite Schmierstoffreservoir (40) über einen Überlauf (59) zum Einstellen eines maximalen Volumenstroms im Ablauf (42) verfügt.

7. Getriebe (10) nach einem der Ansprüche 1 bis 6, **dadurch gekennzeichnet, dass** der Ablauf (42) mit einer Abgabevorrichtung (47) zur Abgabe von Schmierstoff (33) an eine antriebsleistungsübertragende Komponente (16) des Getriebes (10) verbunden ist.

8. Getriebe (10) nach einem der Ansprüche 1 bis 7, **dadurch gekennzeichnet, dass** die Pumpe (20) mit einem Schmierstofffilter (36) und/oder einem Schmierstoffkühler (37) verbunden ist.

9. Getriebe (10) nach einem der Ansprüche 1 bis 8, **dadurch gekennzeichnet, dass** zwischen der Pumpe (20) und dem zweiten Schmierstoffreservoir (40) ein Druckhalteventil (51) angeordnet ist.

10. Getriebe (10) nach einem der Ansprüche 1 bis 9, **dadurch gekennzeichnet, dass** das Getriebe (10) als Planetengetriebe, als Stirnradgetriebe, als Kegelradgetriebe, als Hypoidgetriebe oder als Schneckengetriebe ausgebildet ist.

11. Antriebsstrang (95), umfassend eine Rotorwelle (94) und einen Generator (95), die über ein Getriebe (10) drehmomentübertragend verbunden sind, **dadurch gekennzeichnet, dass** das Getriebe (10) nach einem der Ansprüche 1 bis 10 ausgebildet ist.

12. Windkraftanlage (90), umfassend einen Rotor (92), der drehbar an einer Gondel (91) angebracht ist, und mit einem in der Gondel (91) aufgenommenen Antriebsstrang (95) zur Gewinnung von Elektrizität verbunden ist, **dadurch gekennzeichnet, dass** der Antriebsstrang (95) nach Anspruch 11 ausgebildet ist.

13. Industrie-Applikation (80), umfassend eine Antriebseinheit (82) und eine Abtriebseinheit (84), die drehmomentübertragend über ein Getriebe (10) miteinander verbunden sind, **dadurch gekennzeichnet, dass** das Getriebe (10) nach einem der Ansprüche 1 bis 10 ausgebildet ist.
